# EUROPEAN PATENT APPLICATION

(11) **EP 4 148 895 A1**
(43) Date of publication of application: **15.03.2023**
(21) Application number: 21808919.1
(22) Date of filing: 16.04.2021
(51) Int. Cl.: H01M 50/51, H01M 50/593

(54) **BATTERY, BATTERY PACK AND AUTOMOBILE**

(30) Priority: 18.05.2020 CN 202010421323
(71) Applicant: BYD Company Limited, Shenzhen, Guangdong 518118 (CN)
(72) Inventor: HU, Shichao, Shenzhen, Guangdong 518118 (CN); ZHANG, Mingming, Shenzhen, Guangdong 518118 (CN); ZHU, Yan, Shenzhen, Guangdong 518118 (CN)
(74) Representative: Hoffmann Eitle
(86) International application number: PCT/CN2021/087931
(87) International publication number: WO 2021/233035

(57) **Abstract**

The present disclosure provides a battery, a battery pack and a vehicle. The battery includes a housing and multiple electrode core assemblies packaged in the housing. Each of the electrode core assemblies includes a packing film and at least one electrode core, and the at least one electrode core is located in an accommodating cavity defined by the packing film. A spacer is arranged between every two of the electrode core assemblies connected in series. Each of the electrode core assemblies includes a first electrode and a second electrode. The first electrode and the second electrode extend out of the packing film. The first electrode of one electrode core assembly of the every two of the electrode core assemblies connected in series is connected to the second electrode of the other electrode core assembly, and a connecting portion between the first electrode and the second electrode correspondingly connected is accommodated in a through hole. The spacer includes an outer circumferential surface facing an inner surface of the housing. At least one first positioning portion is formed on the outer circumferential surface of the spacer, at least one second positioning portion corresponding one-to-one to the at least one first positioning portion is formed on the inner surface of the housing, and the at least one first positioning portion is engaged with the corresponding at least one second positioning portion to fix the spacer and the housing.

## Description

### CROSS-REFERENCE TO RELATED APPLICATIONS

The present disclosure claims priority to Chinese Patent Application No. 202010421323.3, entitled "BATEERY, BATTERY PACK AND VEHICLE" and filed by BYD Co., Ltd. on May 18, 2020.

### FIELD

The present disclosure relates to the field of batteries, and more specifically, to a battery, a battery pack, and a vehicle.

### BACKGROUND

In the related art, to increase the capacity of a battery, multiple electrode cores are connected in series in the housing of the battery. During using the battery, the connecting portion between the electrode cores are prone to be twisting or breakage. In addition, under vibration or shaking, the multiple electrode cores are likely to move in the housing, leading to a relative displacement between the electrode cores and causing damage to the electrode cores. For example, the current collector is damaged, the separator is wrinkled, or the active material layer on the electrode plate falls off. As a result, the stability of the battery is affected, incurring safety problems.

### SUMMARY

The present disclosure is to resolve at least one of the technical problems in the related art.

To resolve the foregoing technical problem, a technical solution in the present disclosure is as follows.

A first aspect of the present disclosure provides a battery, including a housing and multiple electrode core assemblies packaged in the housing. The electrode core assemblies are connected in series. Each of the electrode core assemblies includes a packing film and at least one electrode core, and the at least one electrode core is located in an accommodating cavity defined by the packing film. A spacer is arranged between every two of the electrode core assemblies connected in series. The spacer is provided with a through hole. Each of the electrode core assemblies includes a first electrode and a second electrode. The first electrode and the second electrode extend out of the packing film. The first electrode of one electrode core assembly of the every two of the electrode core assemblies connected in series is connected to the second electrode of the other electrode core assembly, and a connecting portion between the first electrode and the second electrode correspondingly connected is accommodated in the through hole. The spacer includes an outer circumferential surface facing an inner surface of the housing. At least one first positioning portion is formed on the outer circumferential surface of the spacer. At least one second positioning portion corresponding one-to-one to the at least one first positioning portion is formed on the inner surface of the housing, and the at least one first positioning portion is engaged with the corresponding at least one second positioning portion to fix the spacer and the housing.

Optionally, each of the at least one first positioning portion is a groove recessed on the outer circumferential surface of the spacer toward an interior of the spacer. Each of the at least one second positioning portion is a protrusion formed on the inner surface of the housing, and the protrusion is embedded in the groove.

Optionally, each of the at least one first positioning portion is a protrusion formed on the outer circumferential surface of the spacer. The second positioning portion is a groove recessed on the inner surface of the housing, and the protrusion is embedded in the groove.

Optionally, the every two of the electrode core assemblies connected in series are two adjacent electrode core assemblies, and the spacer is located between the two adjacent electrode core assemblies.

Optionally, the spacer includes a first insert and a second insert. The first insert and the second insert are respectively arranged on two sides of the connecting portion between the first electrode and the second electrode, to jointly clamp the connecting portion, and a gap between the first insert and the second insert constitutes the through hole.

Optionally, the first insert and the second insert are respectively fixed to the electrode core assemblies by adhesion.

Optionally, a gap between the two adjacent electrode core assemblies is filled with a plastic material to form the spacer between the two adjacent electrode core assemblies.

Optionally, an outer surface of the electrode core assembly is fixed to the inner surface of the housing by adhesion.

A second aspect of the present disclosure provides a battery pack, including multiple batteries.

A third aspect of the present disclosure provides a vehicle, including the foregoing battery pack.

In comparison to the related art, the beneficial effects of the present disclosure are as follows.

In the present disclosure, the spacer is arranged between the every two of the electrode core assemblies connected in series, and the connecting portion of the every two of the electrode core assemblies connected in series is arranged in the spacer. In this way, by using the spacer, each of the electrode core assemblies may be fixed better, the movement between the electrode core assemblies may be avoided, and an effective fixing of the connection between the electrode core assemblies may be kept. In addition, the strength of the connecting portion may be enhanced, so as to prevent the connecting portion between the electrode core assemblies from being twisted or broke during using the battery, and improve the reliability of the connection between the electrode core assemblies. In addition, the spacer and the housing are fixed by the engagement of the first positioning portion of the spacer and the second positioning portion on the housing, which may further avoid the movement between the electrode core assemblies to improve an anti-movement effect.

### BRIEF DESCRIPTION OF THE DRAWINGS

FIG. 1 is a schematic structural diagram of a battery without a housing in an embodiment of the present disclosure;
FIG. 2 is a schematic structural diagram of an electrode core assembly of a battery in an embodiment of the present disclosure;
FIG. 3 is a schematic structural diagram of a battery in an embodiment of the present disclosure;
FIG. 4 is a schematic assembled diagram of the cooperation between an electrode core assembly and spacers of the present disclosure;
FIG. 5 is a schematic structural diagram of the cooperation between an electrode core assembly and spacers of the present disclosure;
FIG. 6 is a schematic cross-sectional diagram of a battery at a VI-VI position in an embodiment of the present disclosure;
FIG. 7 is a schematic cross-sectional diagram of FIG. 6 in another embodiment of the present disclosure;
FIG. 8 is a schematic cross-sectional diagram of FIG. 6 in another embodiment of the present disclosure;
FIG. 9 is a schematic structural diagram of a battery pack in an embodiment of the present disclosure; and
FIG. 10 is a schematic structural diagram of a vehicle of an embodiment of the present disclosure.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The following embodiments described with reference to the accompanying drawings are exemplary, and are intended to describe the present disclosure and cannot be construed as a limitation to the present disclosure.

Embodiments of the present disclosure are described in detail below, and examples of the embodiments are shown in accompanying drawings, where the same or similar elements or the elements having same or similar functions are denoted by the same or similar reference numerals throughout the description. The following embodiments described with reference to the accompanying drawings are exemplary, and are intended to describe the present disclosure and cannot be construed as a limitation to the present disclosure.

In descriptions of the present disclosure, it should be understood that direction or position relationships indicated by terms such as "length", "width", "above", "below", "front", "back", "left", "right", "vertical", "horizontal", "top", "bottom", "inside", and "outside" are direction or position relationships based on the accompanying drawings, and are used only for conveniently describing the present disclosure and simplifying descriptions, instead of indicating or suggesting that a represented apparatus or component needs to have a particular direction or is constructed and operated in a particular direction, and therefore shall not be understood as limiting the present disclosure.

In addition, the terms "first" and "second" are used merely for the purpose of description, and shall not be construed as indicating or implying relative importance or implying a quantity of indicated technical features. Therefore, features defining "first" and "second" may explicitly or implicitly include one or more such features. In the descriptions of the present disclosure, "a plurality of" means two or more, unless otherwise definitely and specifically limited.

In the present disclosure, unless explicitly specified or limited otherwise, the terms "mounted", "connected", "connection", and "fixed" should be understood broadly, for example, which may be fixed connections, detachable connections or integral connections; or the connection may be a mechanical connection or an electrical connection; a direct connection, an indirect connection through an intermediate, or internal communication between two elements or an interaction relationship between two elements. A person of ordinary skill in the art can understand specific meanings of the foregoing terms in the present disclosure according to a specific situation.

The present disclosure provides a battery, including a housing and multiple electrode core assemblies packaged in the housing. The electrode core assemblies are connected in series. Each of the electrode core assemblies includes a packing film and at least one electrode core, and the at least one electrode core is located in an accommodating cavity defined by the packing film. A spacer is arranged between every two of the electrode core assemblies connected in series. The spacer is provided with a through hole. Each of the electrode core assemblies includes a first electrode and a second electrode. The first electrode and the second electrode extend out of the packing film. The first electrode of one electrode core assembly of the every two of the electrode core assemblies connected in series is connected to the second electrode of the other electrode core assembly, and a connecting portion between the first electrode and the second electrode correspondingly connected is accommodated in the through hole. The spacer includes an outer circumferential surface facing an inner surface of the housing. At least one first positioning portion is formed on the outer circumferential surface of the spacer. At least one second positioning portion corresponding one-to-one to the at least one first positioning portion is formed on the inner surface of the housing, and the at least one first positioning portion is engaged with the corresponding at least one second positioning portion to fix the spacer and the housing.

In comparison to the related art, the beneficial effects of the present disclosure are as follows.

In the present disclosure, the spacer is arranged between the every two of the electrode core assemblies connected in series, and the connecting portion of the every two of the electrode core assemblies connected in series is arranged in the spacer. In this way, by using the spacer, the electrode core assemblies may be fixed better, the movement between the electrode core assemblies may be avoided, and an effective fixing of the connection between the electrode core assemblies may be kept. In addition, the strength of the connecting portion may be enhanced, so as to prevent the connecting portion between the electrode core assemblies from being twisted and broke during using the battery, and improve the reliability of the connection between the electrode core assemblies. In addition, the spacer and the housing are fixed by the engagement of the first positioning portion of the spacer and the second positioning portion on the housing, which may further avoid the movement between the electrode core assemblies to improve an anti-movement effect.

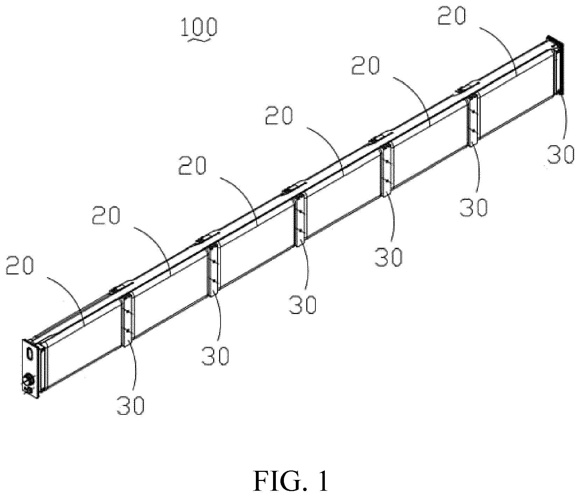

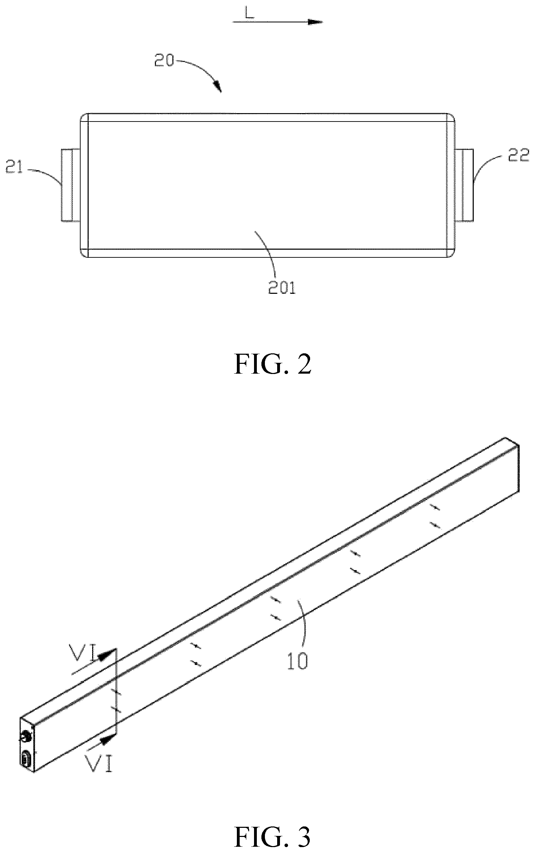

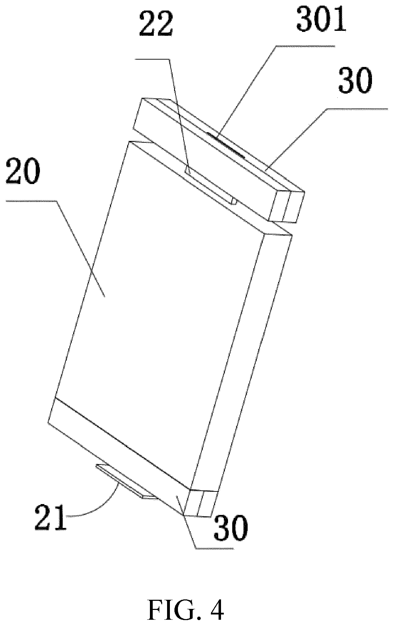

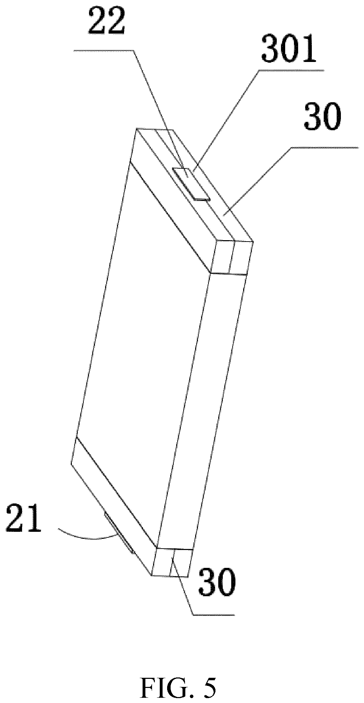

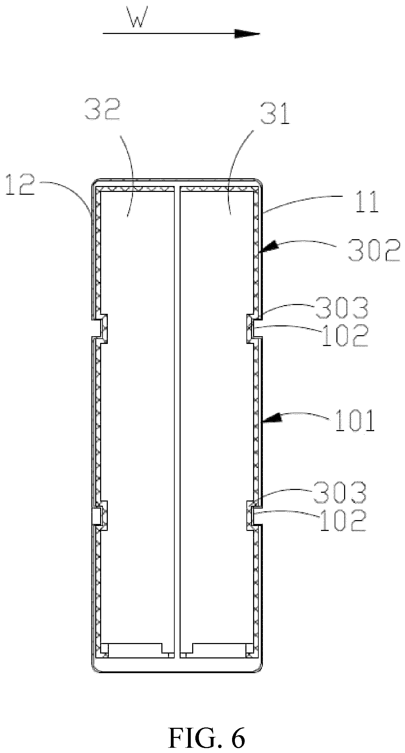

Referring to FIG. 1, FIG. 2 and FIG. 3 together, FIG. 1 is a schematic structural diagram of a battery without a housing in an embodiment of the present disclosure; FIG. 2 is a schematic structural diagram of an electrode core assembly of a battery in an embodiment of the present disclosure; and FIG. 3 is a schematic structural diagram of a battery according to an embodiment of the present disclosure. A battery 100 includes a housing 10 and multiple electrode core assemblies 20 packaged in the housing 10. The multiple electrode core assemblies 20 are connected in series. Each of the electrode core assemblies 20 includes a packing film 201 and at least one electrode core, and the at least one electrode core is located in an accommodating cavity defined by the packing film 201. A spacer 30 is arranged between every two of the electrode core assemblies 20 connected in series. Referring to FIG. 4 and FIG. 5, FIG. 4 and FIG. 5 are schematic structural diagrams of the cooperation between an electrode core assembly and spacers of the present disclosure. The spacer 30 is provided with a through hole 301. Each of the electrode core assemblies 20 includes a first electrode 21 and a second electrode 22. One of the first electrode 21 and the second electrode 22 is a positive electrode, and the other is a negative electrode. The first electrode 21 and the second electrode 22 extend out of the packing film 201. The first electrode 21 of one electrode core assembly 20 of the every two of the electrode core assemblies 20 connected in series is connected to the second electrode 22 of the other electrode core assembly 20, and a connecting portion is accommodated in the through hole 301. Referring to FIG. 6, FIG. 6 is a schematic cross-sectional diagram of a battery at a VI-VI position according to the present disclosure. The spacer 30 includes an outer circumferential surface 302 facing an inner surface of the housing 10. At least one first positioning portion 303 is formed on the outer circumferential surface 302 of the spacer 30. At least one second positioning portion 102 corresponding one-to-one to the at least one first positioning portion 303 is formed on the inner surface 101 of the housing 10. The at least one first positioning portion 303 is engaged with the corresponding at least one second positioning portion 102 to fix the spacer 30 and the housing 10.

The connecting portion between the electrode core assemblies 20 refers to the connecting portion between the first electrode 21 of one electrode core assembly 20 of the every two of the electrode core assemblies 20 and the second electrode 22 of the other electrode core assembly 20. In this way, the spacer 30 is arranged between the every two of the electrode core assemblies 20 connected in series, and the connecting portion of the every two of the electrode core assemblies 20 connected in series is arranged in the spacer 30. In this way, by using the spacer 30, the electrode core assemblies 20 may be fixed better, the movement between the electrode core assemblies 20 may be avoided, and an effective fixing of the connection between the electrode core assemblies 20 may be kept. In addition, the strength of the connecting portion may be enhanced, so as to prevent the connecting portion between the electrode core assemblies 20 from being twisted and broke during using the battery, and improve the reliability of the connection between the electrode core assemblies 20. In addition, the spacer 30 and the housing 10 are fixed by the engagement of the first positioning portion 303 of the spacer 30 and the second positioning portion 102 on the housing 10, which may further avoid the movement between the electrode core assemblies 20 to improve an anti-movement effect.

In some embodiments of the present disclosure, a length of the battery 100 extend along a first direction L, a length of each of the electrode core assemblies 20 extends along the first direction L, and the multiple electrode core assemblies 20 are arranged along the first direction L. In addition, the first electrode 21 and the second electrode 22 of each of the electrode core assemblies 20 are arranged on two opposite ends of each of the electrode core assemblies 20 along the first direction L, and the every two of the electrode core assemblies 20 connected in series are two adjacent electrode core assemblies 20, that is, in this embodiment of the present disclosure, the two adjacent electrode core assemblies 20 are connected in series. Therefore, the multiple electrode core assemblies 20 adopt a "head-to-head" arrangement manner. This arrangement manner may conveniently implement a two-by-two connection in series between the electrode core assemblies 20 with a simple connection structure. In addition, this arrangement manner may conveniently produce the battery 100 with a longer length. In this way, when the battery 100 is mounted in an outer housing of a battery pack, it may not be necessary to arrange a supporting structure such as a crossbeam or a stringer, since the battery 100 is directly mounted on the outer housing of the battery pack by using the housing 10 of the battery 100 itself as a support. Therefore, an internal space of the battery pack may be saved, a volume utilization rate of the battery pack may be improved, and the weight of the battery pack may be reduced.

When the multiple electrode core assemblies 20 are connected in series, the connecting portion between the electrode core assemblies 20 becomes a weak part of the entire battery and is prone to be twisting or breakage during using the battery, causing an ineffective connection. In addition, since the multiple electrode core assemblies 20 are connected in series in the battery, a risk of the movement of the battery in the first direction L is increased. Therefore, in the present disclosure, the spacer 30 is arranged between the every two of the electrode core assemblies 20 connected in series, and the connecting portion of the every two of the electrode core assemblies 20 is arranged in the through hole 301 of the spacer 30. In this way, the strength of the connecting portion may be enhanced. In addition, the electrode core assemblies 20 are fixed better by the engagement of the first positioning portion 303 of the spacer 30 and the second positioning portion 102 on the housing 10, to avoid the movement between the electrode core assemblies 20 in the first direction L, and keep an effective connection between the electrode core assemblies 20. Therefore, the mechanical strength of the battery 100 may be enhanced, so as to avoid a situation of being twisting and breakage during using the battery 100.

In some embodiments, the housing 10 is a metal housing, for example, an aluminum housing. Apparently, other metal may be selected for formation as required. Therefore, the housing 10 has enough strength to avoid being damaged or deformed and improve the safety of the battery 100.

In some embodiments, the packing film 201 is an aluminum-plastic composite film or a polymer material composite film. The first electrode 21 and the second electrode 22 of each of the electrode core assemblies 20 extend out of the packing film 201. That is, in this embodiment of the present disclosure, the spacer 30 is a spacer 30 arranged outside the packing film 201, and the reliability of the connection between the electrode core assemblies 20 is improved through the arrangement of the spacer 30 outside the film.

The electrode core mentioned in the present disclosure may be understood as an electrode core that is commonly used in the field of power batteries. The electrode core and each of the electrode core assemblies 20 are components inside the housing 10 of the battery 100, and cannot be understood as the battery itself; and the electrode core may be an electrode core formed by winding and generally refers to a component that is not fully sealed. Therefore, in the present disclosure, the battery provided cannot be simply understood as a battery module or a battery pack with a reason that the battery includes multiple electrode cores. In the present disclosure, each of the electrode core assemblies 20 may be composed of a single electrode core; or may include multiple electrode cores, and the multiple electrode cores are connected in parallel to constitute each of the electrode core assemblies 20.

In some embodiments, the every two of the electrode core assemblies 20 connected in series are two adjacent electrode core assemblies 20, and the spacer 30 is located between the two adjacent electrode core assemblies 20.

Therefore, the spacer 30 is arranged between every two adjacent electrode core assemblies 20, and the two adjacent electrode core assemblies 20 may be spaced by the spacer 30. A mutual positioning between the spacer 30 and the housing 10 is beneficial to further avoid the movement of the electrode core assemblies 20 in the first direction L.

In some embodiments, referring to FIG. 6, the first positioning portion 303 is a groove recessed on the outer circumferential surface 302 of the spacer 30 toward an interior of the spacer 30; and the second positioning portion 102 is a protrusion formed on the inner surface 101 of the housing 10, and the protrusion is embedded in the groove to fix the spacer 30 and the housing 10.

Therefore, the groove is directly recessed on the spacer 30 and the protrusion is directly formed on housing 10, so that the fixing and positioning between the spacer 30 and the housing 10 are implemented through a cooperation between the protrusion on the housing 10 and the groove on the spacer 30, which may not only further avoid the movement of the electrode core assemblies 20, but also reduce the space occupied by the battery 100.

As shown in FIG. 6, the spacer 30 may be connected to a surface with a largest area (also referred to as "a large surface") of the housing 10. Specifically, the thickness of the battery 100 extends along a second direction W, where the second direction W is perpendicular to the first direction L. The housing 10 of each battery 100 includes a first side surface 11 and a second side surface 12 on opposite sides in the second direction W, and the first side surface 11 and the second side surface 12 are the largest surfaces of the battery 100. A second positioning portion 102 is arranged on each of the first side surface 11 and the second side surface 12 of the housing 10. First positioning portions 303 are arranged on an inner circumferential surface of the spacer 30 respectively corresponding to the first side surface 11 and the second side surface 12. The first positioning portions 303 correspond one-to-one to and are correspondingly engaged with the second positioning portions 102, to fix the spacer 30 to the housing 10.

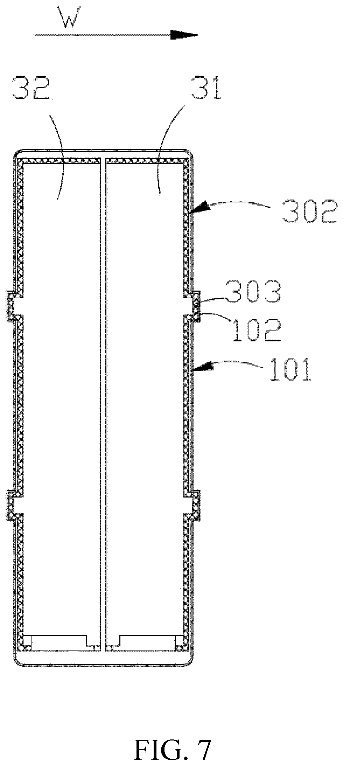

In some embodiments, referring to FIG. 7, the first positioning portion 303 is a protrusion formed on the outer circumferential surface 302 of the spacer 30. The second positioning portion 102 is a groove recessed on the inner surface 101 of the housing 10, and the protrusion is embedded in the groove to fix the spacer 30 and the housing 10.

Therefore, the protrusion is directly formed on the spacer 30 and the groove is directly recessed on the inner surface 101 of the housing 10, so that the fixing and positioning between the spacer 30 and the housing 10 are implemented through a cooperation between the groove on the housing 10 and the protrusion on the spacer 30, which may not only further avoid the movement of the electrode core assemblies 20, but also reduce the space occupied by the battery 100.

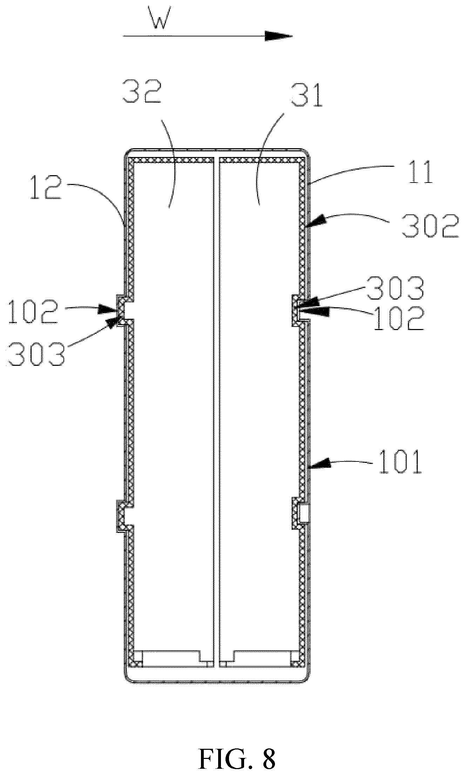

In some embodiments, referring to FIG. 8, the second positioning portion 102 on the first side surface 11 is a protrusion formed on the inner surface 101 of the housing 10. The first positioning portion 303 is a groove corresponding to the protrusion and recessed on outer circumferential surface 302 of the spacer 30, and the protrusion is engaged with the groove. The second positioning portion 102 on the second side surface 12 is a groove recessed on the inner surface 101 of the housing 10. The first positioning portion 303 is a protrusion corresponding to the groove and formed on the outer circumferential surface 302 of the spacer 30, and the protrusion is engaged with the groove.

Therefore, the second positioning portion 102 on the first side surface 11 of the housing 10 of the battery 100 is a protrusion, and the corresponding first positioning portion 303 is a groove. The second positioning portion 102 on the second side surface 12 is a groove, and the corresponding first positioning portion 303 is a protrusion. The protrusion is engaged with the groove to implement the fixing and positioning between the spacer 30 and the housing 10 and implement the fixing and positioning between the housings 10, which may not only further avoid the movement of the electrode core assemblies 20, but also avoid a mutual movement between the battery 100 and the adjacent housing 10.

In some embodiments, referring to FIG. 4 and FIG. 5, the spacer 30 is a split spacer. The spacer is pre-shaped and then mounted on between the electrode core assemblies 20. The spacer 30 includes a first insert 31 and a second insert 32. The first insert 31 and the second insert 32 are respectively arranged on two sides of the connecting portion between the first electrode 21 and the second electrode 22 correspondingly connected, to jointly clamp the connecting portion. A gap between the first insert 31 and the second insert 32 constitutes the through hole 301. That is, the first insert 31 and the second insert 32 are respectively arranged on two sides of the connecting portion between the electrode core assemblies 20, and the first insert 31 and the second insert 32 are in pressing contact with the connecting portion to jointly clamp the connecting portion and implement to fix the connecting portion in the spacer 30. An occupied space of the connecting portion in the spacer 30 is the through hole 301 on the spacer 30.

The first insert 31 and the second insert 32 are pre-shaped and then assembled. For example, during assembly, the first insert 31 and the second insert 32 may be respectively fixed on two sides of the connecting portion between the electrode core assemblies 20 after the electrode core assemblies 20 are connected to each other, so as to implement the assembly of the spacer 30 and the electrode core assemblies 20.

In some embodiment, the first insert 31 and the second insert 32 are respectively fixed to each of the electrode core assemblies 20 by adhesion, that is, an adhesive layer may be arranged in a gap between the spacer 30 and the electrode core assemblies 20, so as to fix the spacer 30 and the electrode core assemblies 20, which is beneficial to fix the electrode core assemblies 20. Therefore, the movement between the electrode core assemblies 20 can be avoided better, the connection between the electrode core assemblies 20 is ensured, and the safety of the battery is improved.

In some embodiments, the first insert 31 and the second insert 32 may be fixed to each other through a form of a buckle, or the first insert 31 and the second insert 32 may be fixed to each other by adhesion, or the first insert 31 and the second insert 32 may be respectively adhesively fixed to the connecting portion between the electrode core assemblies 20 by adhesion.

Therefore, the first insert 31 and the second insert 32 may be positioned mutually, and a cooperation between the first insert 31 and the second insert 32 has a better effect, which is beneficial to an assembly of other elements.

In some embodiments, a gap between two adjacent electrode core assemblies 20 is filled with a plastic material to form the spacer 30 between the two adjacent electrode core assemblies 20. That is, after the two adjacent electrode core assemblies 20 are connected to each other, the plastic material may be directly filled in the two adjacent electrode core assemblies 20 to form the spacer 30 between the two adjacent electrode core assemblies 20, so that the connecting portion of the two adjacent electrode core assemblies 20 is located in the spacer 30.

In some embodiments, an outer surface of each of the electrode core assemblies 20 is fixed to the inner surface 101 of the housing 10 by adhesion. Therefore, the electrode core assemblies 20 may be further fixed to avoid the movement between the electrode core assemblies 20.

In some embodiments, the battery 100 is a rough cuboid. The battery 100 is defined with a length L, a thickness W, and a height H, where the length L is greater than the height H, and the height H is greater than the thickness W. The length of the battery 100 ranges from 400 mm to 2500 mm. A ratio of the length of the battery 100 to the height of the battery 100 ranges from 4 to 21.

It should be noted that, that the battery 100 is a rough cuboid may be understood as that the battery 100 may be a cuboid, a cube, or a rough cuboid or a cube having a special shape locally; or may present an approximate cuboid or cube as a whole, but partially have a gap, a bulge, a chamfer, an arc, and a curve.

The present disclosure further provides a battery module, including multiple batteries 100 according to the present disclosure.

The present disclosure further provides a battery pack, including multiple batteries 100 or the battery module according to the present disclosure.

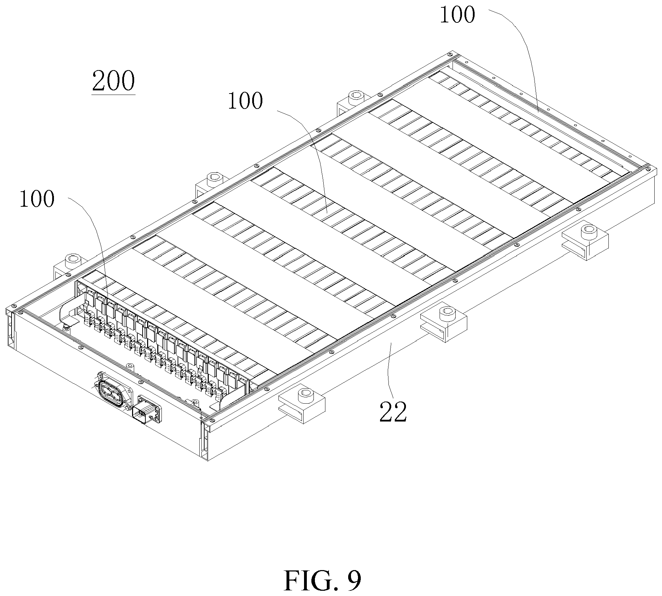

Referring to FIG. 9, the present disclosure provides a battery pack 200, including a tray 22 and a battery 100 arranged on the tray 22.

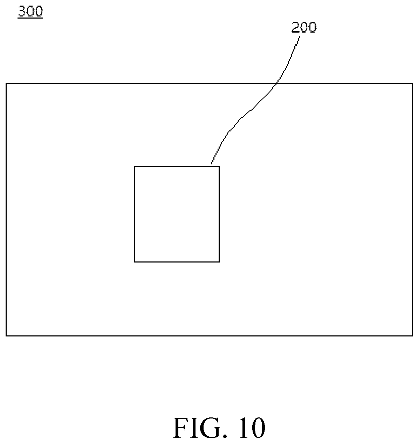

As shown in FIG. 10, the present disclosure further provides a vehicle 300, including the battery module or the battery pack 200 according to the present disclosure.

In conclusion, it can be seen that the present disclosure has the foregoing excellent characteristics, which enables it to improve the performance that is not available in the related art in use, and has practicability, thereby becoming a product of great practical value.

The foregoing descriptions are merely optional embodiments of the present disclosure, but are not intended to limit the present disclosure. Any modification, equivalent replacement, or improvement made without departing from the spirit and principle of the present disclosure shall fall within the protection scope of the present disclosure. In the description of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In addition, the terms "first" and "second" are used merely for the purpose of description, and shall not be construed as indicating or implying relative importance or implying a quantity of indicated technical features. Therefore, features defining "first" and "second" may explicitly or implicitly include one or more such features. In the descriptions of the present disclosure, "a plurality of" means two or more than two, unless otherwise definitely and specifically limited.

In the present disclosure, unless explicitly specified or limited otherwise, the terms "mounted", "connected", "connection", and "fixed" should be understood broadly, for example, which may be fixed connections, detachable connections or integral connections; or the connection may be a mechanical connection or an electrical connection; a direct connection, an indirect connection through an intermediate, or internal communication between two elements or an interaction relationship between two elements. A person of ordinary skill in the art can understand specific meanings of the foregoing terms in the present disclosure according to a specific situation.

In the present disclosure, unless explicitly specified or limited otherwise, a first characteristic "on" or "under" a second characteristic may be the first characteristic in direct contact with the second characteristic, or the first characteristic in indirect contact with the second characteristic by using an intermediate medium. Moreover, the first feature "over", "above" and "up" the second feature may be that the first feature is directly above or obliquely above the second feature, or simply indicates that a horizontal height of the first feature is higher than that of the second feature. The first feature "under", "below" and "down" the second feature may be that the first feature is directly below or obliquely below the second feature, or simply indicates that a horizontal height of the first feature is less than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present disclosure. In the present specification, schematic representations of the above terms are not necessarily directed to the same embodiments or examples. Moreover, the specific features, structures, materials, or characteristics described may be combined in any one or more embodiments or examples in a suitable manner. In addition, different embodiments or examples described in this specification, as well as features of different embodiments or examples, may be integrated and combined by a person skilled in the art without contradicting each other.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A battery, comprising a housing and a plurality of electrode core assemblies packaged in the housing, wherein the electrode core assemblies are connected in series, each of the electrode core assemblies comprises a packing film and at least one electrode core, and the at least one electrode core is located in an accommodating cavity defined by the packing film;
a spacer is arranged between every two of the electrode core assemblies connected in series, the spacer is provided with a through hole, each of the electrode core assemblies comprises a first electrode and a second electrode, the first electrode and the second electrode extend out of the packing film, the first electrode of one electrode core assembly of the every two of the electrode core assemblies connected in series is connected to the second electrode of the other electrode core assembly, and a connecting portion between the first electrode and the second electrode correspondingly connected is accommodated in the through hole; and
the spacer comprises an outer circumferential surface facing an inner surface of the housing, at least one first positioning portion is formed on the outer circumferential surface of the spacer, at least one second positioning portion corresponding one-to-one to the at least one first positioning portion is formed on the inner surface of the housing, and the at least one first positioning portion is engaged with the corresponding at least one second positioning portion to fix the spacer and the housing.

2. The battery according to claim 1, wherein each of the at least one first positioning portion is a groove recessed on the outer circumferential surface of the spacer toward an interior of the spacer, each of the at least one second positioning portion is a protrusion formed on the inner surface of the housing, and the protrusion is embedded in the groove.

3. The battery according to claim 1 or 2, wherein each of the at least one first positioning portion is a protrusion formed on the outer circumferential surface of the spacer, the second positioning portion is a groove recessed on the inner surface of the housing, and the protrusion is embedded in the groove.

4. The battery according to any one of claims 1 to 3, wherein the every two of the electrode core assemblies connected in series are two adjacent electrode core assemblies, and the spacer is located between the two adjacent electrode core assemblies.

5. The battery according to claim 4, wherein the spacer comprises a first insert and a second insert, the first insert and the second insert are respectively arranged on two sides of the connecting portion between the first electrode and the second electrode, to jointly clamp the connecting portion, and a gap between the first insert and the second insert constitutes the through hole.

6. The battery according to claim 5, wherein the first insert and the second insert are respectively fixed to the electrode core assemblies by adhesion.

7. The battery according to any one of claims 4 to 6, wherein a gap between the two adjacent electrode core assemblies is filled with a plastic material to form the spacer between the two adjacent electrode core assemblies.

8. The battery according to any one of claims 1 to 7, wherein an outer surface of the electrode core assembly is fixed to the inner surface of the housing by adhesion.

9. A battery pack, comprising a plurality of batteries according to any one of claims 1 to 8.

10. A vehicle, comprising the battery pack according to according to claim 9.
